(19) Europäisches Patentamt
European Patent Office
Office européen des brevets

(11) **EP 3 350 564 B1**

(12) **EUROPÄISCHE PATENTSCHRIFT**

(45) Veröffentlichungstag und Bekanntmachung des Hinweises auf die Patenterteilung:
**26.06.2019  Patentblatt 2019/26**

(51) Int Cl.:
***G01M 17/007*** *(2006.01)*

(21) Anmeldenummer: **16784782.1**

(22) Anmeldetag: **14.09.2016**

(86) Internationale Anmeldenummer:
**PCT/DE2016/100431**

(87) Internationale Veröffentlichungsnummer:
**WO 2017/045673 (23.03.2017 Gazette 2017/12)**

(54) **RADAUFNAHME FÜR EINEN FUNKTIONSPRÜFSTAND UND VERFAHREN ZUR ANSTEUERUNG DER STELLMITTEL EINER SCHWIMMPLATTE**

WHEEL RECEIVING AREA FOR A FUNCTION TEST STAND, AND METHOD FOR ACTUATING THE ADJUSTING MEANS OF A FLOATING PLATE

LOGEMENT DE ROUE POUR UN BANC D'ESSAI DE FONCTIONS ET PROCÉDÉ DE COMMANDE DES MOYENS DE RÉGLAGE D'UNE PLAQUE FLOTTANTE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.09.2015   DE 102015115607**

(43) Veröffentlichungstag der Anmeldung:
**25.07.2018   Patentblatt 2018/30**

(73) Patentinhaber: **Dürr Assembly Products GmbH 66346 Püttlingen (DE)**

(72) Erfinder: **TENTRUP, Thomas 66663 Merzig-Mechern (DE)**

(74) Vertreter: **Patentanwaltskanzlei Vièl & Wieske PartGmbB Feldmannstraße 110 66119 Saarbrücken (DE)**

(56) Entgegenhaltungen:
WO-A2-2008/000229   DE-A1-102014 111 192
DE-U1- 20 105 929   US-A1- 2010 001 167
US-B1- 6 473 978

**Beschreibung**

Die vorliegende Erfindung betrifft eine Radaufnahme für einen Funktionsprüfstand für Kraftfahrzeuge mit lenkbaren Rädern nach dem Oberbegriff des Anspruchs 1 sowie ein Verfahren zur Ansteuerung von Stellmitteln einer Radaufnahme gemäß Anspruch 4.

Bei der Prüfung eines fahrenden Fahrzeugs auf einem Roll-, Brems-, ABS-Prüfstand (im folgenden Funktionsprüfstand genannt) muss das Fahrzeug nach dem bisherigen Stand der Technik über die Lenkung in Geradeausposition in Bezug zum Funktionsprüfstand gebracht und dann das Lenkrad in Geradeausstellung gehalten werden, um ein seitliches Wegdriften des fahrenden Fahrzeugs während der Prüfung zu verhindern. Dies geschieht bei einem Funktionsprüfstand am Bandende einer Fahrzeugendmontage durch einen Fahrer. Die Ursache des seitlichen Wegdriftens sind Seitenkräfte, die von den Rollen auf die Reifen ausgeübt werden und die insbesondere bei Lenkeinschlägen der Reifen entstehen. Auf Grund der fortschreitenden technischen Entwicklung bei Fahrzeugkomponenten ist es möglich, Fahrzeuge unter bestimmten Randbedingungen auch in der Produktion autonom zu fahren. Daher ergibt sich auch die Möglichkeit, Fahrzeuge fahrerlos in Funktionsprüfständen zu testen.

Eine Möglichkeit zur Umsetzung des fahrerlosen Testens ist, eine Positionierung des Fahrzeugs in Geradeausstellung in Bezug auf den Funktionsprüfstand durch eine Regelung vorzunehmen. Die Stellgröße ist dabei die Lenkung (Lenkwinkel des Fahrzeugs). Über die Detektion der Lage des Fahrzeugs im Prüfstand kann eine Abweichung von der Sollposition erkannt werden. Weil das Fahrzeug mit simulierten Geschwindigkeiten bis zu 120 km/h im Funktionsprüfstand fährt und das Risiko einer Beschädigung des Fahrzeugs, des Prüfstandes und eine Gefährdung des Bedienungspersonals im Umfeld vermieden werden sollen, muss eine Fehlfunktion der Regelung vermieden werden. Eine derartige Fehlfunktion könnte beispielsweise auf einer fehlerhaften Signalübertragung beruhen bei einer kabellosen Übertragung der Steuersignale auf das Fahrzeug. Der Prüfstand muss daher mit umfangreicher Sicherheitstechnik ausgestattet sein. Diese Sicherheitstechnik im Prüfstand ist kostenintensiv. Dies gilt auch für die Auslegung des Regelkreises mit einem Eingriff in die Steuerung des Fahrzeugs. Dieser Eingriff müsste derzeit nur für diese Art von Prüfung implementiert werden, weil derartige automatisierte Eingriffe derzeit im normalen Fahrbetrieb des Fahrzeugs nicht vorkommen.

Eine weitere Möglichkeit ist in der EP 2 166 332 A2 dokumentiert. Dabei wird eine Stange in einem Punkt seitlich des Fahrzeugs befestigt und wird (durch das geöffnete Seitenfenster) mit dem anderen Ende am Lenkrad des Fahrzeugs befestigt. Ein seitliches Wegdriften des Fahrzeugs bewirkt dadurch einen Lenkeinschlag, der dem seitlichen Wegdriften entgegenwirkt. Der Nachteil dieser Möglichkeit ist, dass die Verbindung mit dem Lenkrad von einem Werker durchgeführt werden muss. Weiterhin muss die Lenkradbefestigung so ausgeprägt sein, dass sie für alle Arten von Lenkrädern funktioniert, eine sichere Verbindung mit dem Lenkrad gewährleistet und dennoch keine Spuren am Lenkrad hinterlässt. Der Stand der Technik wird weiter offenbart in DE102014111191A1, US2010/001167A1, DE20105929, US6473978B1 und WO2008/000229A2.

Die Aufgabe der Erfindung ist, in möglichst einfacher Weise das Wegdriften des fahrenden Fahrzeugs im Funktionsprüfstand weitgehend unabhängig von der Lenkradstellung zu vermeiden und andererseits das fahrende Fahrzeug im Funktionsprüfstand zu positionieren. Diese Aufgabe wird erfindungsgemäß nach Anspruch 1 gelöst durch eine Radaufnahme für einen Funktionsprüfstand für Kraftfahrzeuge mit lenkbaren Rädern, wobei die Radaufnahme eine Schwimmplatte aufweist sowie wenigstens eine auf der Schwimmplatte gelagerte und mit der Schwimmplatte in horizontaler Ebene bewegbare Rolle. Nach der vorliegenden Erfindung weist die Schwimmplatte einen ersten Arbeitszustand auf, in dem der Teil der Schwimmplatte, auf dem die wenigstens eine Rolle gelagert ist, um eine vertikale Achse drehbar gelagert ist, die bezogen auf die Fahrtrichtung eines im Funktionsprüfstand befindlichen Fahrzeugs vor dem wenigstens einen Radaufstandspunkt auf der wenigstens einen Rolle der Schwimmplatte liegt. Weiterhin weist die Schwimmplatte einen zweiten Arbeitszustand auf, in dem der Teil der Schwimmplatte, auf dem die wenigstens eine Rolle gelagert ist, um eine vertikale Achse drehbar gelagert ist, die bezogen auf die Fahrtrichtung eines im Rollenprüfstand befindlichen Fahrzeugs hinter dem wenigstens einen Radaufstandspunkt auf der wenigstens einen Rolle der Schwimmplatte liegt. Der Schwimmplatte sind Stellmittel zugeordnet zur Drehung des Teils der Schwimmplatte, auf dem die wenigstens eine Rolle gelagert ist, in dem ersten sowie dem zweiten Arbeitszustand um die entsprechende vertikale Achse.

Die Angabe der Position der vertikalen Achse in dem ersten bzw. dem zweiten Arbeitszustand vor bzw. hinter dem Radaufstandspunkt auf der wenigstens einen Rolle ist bezogen auf die Fahrtrichtung eines im Rollenprüfstand befindlichen Fahrzeugs.

Für nachfolgende Erläuterungen sollen zur Vereinfachung Koordinatensysteme sowie deren Lage definiert werden.

Die Z-Achse soll eine vertikale Achse beschreiben.

Weiterhin soll ein erstes kartesisches Koordinatensystem X, Y, Z des Funktionsprüfstandes definiert werden. Die positive X-Richtung soll dabei die Fahrtrichtung eines im Funktionsprüfstand befindlichen Fahrzeugs sein. Die positive Y-Richtung soll dabei die Richtung querab nach links zu einem im Funktionsprüfstand befindlichen Fahrzeug bezeichnen.

Weiterhin soll noch ein kartesisches Koordinatensystem x, y, z der Radaufnahme definiert werden. Die x-Richtung der Radaufnahme soll die Richtung in der horizontalen Ebene beschreiben, die senkrecht zur Achse der wenigstens einen Rolle orientiert ist. Die positive x-Richtung entspricht der Richtung, in der ein Rad fährt bei Vorwärtsfahrt eines aufstehenden Fahrzeugs, wenn die Radachse kollinear zur y-Achse ist. Die positive y-Richtung entspricht der Richtung nach links querab zu einem auf der Radaufnahme aufstehenden Rad des Fahrzeugs.

Die Radaufnahme weist eine Betriebsstellung auf, in der die Schwimmplatte der Radaufnahme vollständig geklemmt ist und nicht beweglich. Diese Betriebsstellung wird benötigt, damit ein Fahrzeug in den Funktionsprüfstand einfahren und aus dem Funktionsprüfstand ausfahren kann. Dazu werden die Schwimmplatten geklemmt.

Zur Durchführung der Funktionstests können die Radaufnahmen eine weitere Betriebsstellung aufweisen, in der die Schwimmplatten frei beweglich sind. Dies betrifft sowohl eine Verschiebung der Schwimmplatte in X- sowie in Y-Richtung sowie auch eine Drehung der Schwimmplatte um eine Achse in Z-Richtung.

Es hat sich gezeigt, dass es bei einer Drehung der Radaufnahme, auf denen das jeweilige Rad aufsteht, auf die Position der (vertikalen) Drehachse der Radaufnahme in der horizontalen Ebene ankommt, ob sich durch die Drehung die Lage des Fahrzeugs stabilisiert.

Eine weitere Voraussetzung ist dabei, dass sich die Räder des Fahrzeugs drehen. Dies kann auch bedeuten, dass die Räder des Fahrzeugs gebremst werden bei angetriebenen Rollen der Radaufnahme.

Weitere Randbedingungen für die Stabilisierung bestehen aus dem jeweiligen Antriebszustand des Rades und der Rollen der Radaufnahme.

Dabei ist das Fahrzeug fixiert, indem dieses beispielsweise in seiner Position im Funktionsprüfstand mechanisch gehalten wird. Das Fahrzeug kann alternativ auch als fixiert betrachtet werden, wenn die Nachjustierung der Radaufnahme zur Stabilisierung des Fahrzeugs so schnell erfolgt, dass das seitliche Wegdriften des Fahrzeugs wegen der Trägheit des Fahrzeugs noch nicht eingesetzt hat. In diesem Fall erfolgt also die Stabilisierung des Fahrzeugs bevor sich eine Instabilität in einer Positionsänderung des Fahrzeugs auswirken kann.

Gemäß Anspruch 1 wird eine Radaufnahme vorgeschlagen, die die notwendige technische Ausrüstung hat durch den einstellbaren ersten bzw. zweiten Arbeitszustand der Radaufnahme, um die Position der vertikalen Drehachse in der horizontalen Ebene für eine Drehung der Schwimmplatte und damit auch der auf der Schwimmplatte befindlichen Rollen (d.h. der Orientierung der Achsen der Rollen in der horizontalen Ebene) mittels der Stellmittel in stabilisierender Weise vornehmen zu können.

Anspruch 2 betrifft dabei die technische Ausgestaltung, bei der das Rollensystem der Radaufnahme aus einer Doppelrolle besteht, bei der die die beiden Rollen diese Doppelrollensystems über schaltbare Kupplungen einzeln oder auch gemeinsam mit einem Antriebssystem verbunden werden können.

Bei der Ausgestaltung nach Anspruch 3 sind Kopplungsmittel jeweils eines Antriebssystems derart in Eingriff mit der Radaufnahme, dass über ein Blockieren eines der Antriebssysteme mit gleichzeitiger Betätigung des anderen Antriebssystems der Teil der Schwimmplatte, auf dem die wenigstens eine Rolle gelagert ist, in dem ersten Arbeitszustand oder in dem zweiten Arbeitszustand gedreht wird.

Dabei erweist es sich als vorteilhaft, wenn die Kopplungsmittel in Eingriff bleiben. Dadurch wird es insbesondere auch möglich, durch einen Umschaltvorgang der beiden Antriebssysteme derart, dass das Antriebssystem, das in der blockierten Stellung war, in die Betätigungsstellung umgeschaltet wird, und das andere Antriebssystem, das in der Betätigungsstellung war, in die blockierte Stellung umgeschaltet wird, sofort von dem ersten Arbeitszustand auf den zweiten Arbeitszustand umzuschalten (und umgekehrt). Insbesondere müssen bei einer solchen Ausgestaltung die Kopplungsmittel nicht erst mechanisch in Eingriff gebracht werden. Der Umschaltvorgang erfolgt über eine entsprechende Ansteuerung der Antriebssysteme der Kopplungsmittel.

Besonders vorteilhaft sind die Kopplungsmittel so an der Radaufnahme gelagert, dass diese Lagerung die Bewegung bei der Drehung des Teils der Schwimmplatte, auf dem die wenigstens eine Rolle gelagert ist, in +X-Richtung ausgleicht. Dadurch wird es möglich, Linearantriebe zu verwenden als Stellmittel für eine Drehbewegung. Dies erweist sich insofern als vorteilhaft, weil der Linearantrieb konstruktiv einfach ist.

Anspruch 4 beschreibt ein Verfahren zur Ansteuerung der Stellmittel einer Schwimmplatte nach einem der Ansprüche 1, 2 oder 3, bei dem der Teil der Schwimmplatte, auf dem die wenigstens eine Rolle gelagert ist, mittels der Stellmittel derart in eine Sollposition gedreht wird, dass die Achse der wenigstens eine Rolle der Radaufnahme parallel verläuft zu einer Projektion der Radachse des auf der wenigstens einen Rolle aufstehenden Rades in vertikaler Richtung in die horizontale Ebene, wobei die Drehung in dem ersten Arbeitszustand der Radaufnahme oder dem zweiten Arbeitszustand der Radaufnahme erfolgt, abhängig von der Richtung und Stärke eines Lenkeinschlags des Fahrzeugrades, sowie weiterhin abhängig davon, ob das Fahrzeugrad die wenigstens eine Rolle antreibt oder bremst bzw. von der wenigstens einen Rolle angetrieben oder gebremst wird.

Es hat sich gezeigt, dass mit diesen Drehungen die Radaufnahme und damit auch die Längsachsen der Rollen der Radaufnahme den Lenkbewegungen der Räder so nachgeführt werden können, dass durch eine Drehung des Rades relativ zu den Rollen der Radaufnahme keine seitlichen Kräfte auf das Fahrzeug übertragen werden.

Damit wird es möglich, durch eine entsprechende Drehung der Radaufnahmen das Fahrzeug in Querrichtung sicher und stabil im Funktionsprüfstand zu halten bzw. zu positionieren. Die bei der Lenkung des fahrenden Fahrzeugs auftretenden Seitenkräfte können durch die vorliegende Erfindung kontrolliert eliminiert werden.

Die Ansteuerung der Sollposition der Schwimmplatte bei dem Verfahren nach Anspruch 4 kann durch eine Steuerung erfolgen oder auch durch eine Regelung, bei der die Position des Fahrzeugs im Funktionsprüfstand in Querrichtung bewertet wird.

Dies erweist sich insofern als vorteilhaft, weil nichts am Steuerrad des Fahrzeugs adaptiert werden muss. Dies wirkt sich vorteilhaft auf die Taktzeit im laufenden Produktionsprozess aus, weil die Umrüstzeiten zur Ankopplung und Abkopplung eines Verbindungselementes an das Lenkrad eines Fahrzeugs eingespart werden können. Auch können Beschädigungen des Lenkrades durch das An- und Abkoppeln vermieden werden.

Anspruch 5 beschreibt eine mögliche Vorgehensweise, um festzulegen, ob die Radaufnahme mit einer Rolle bzw. gekoppelten Doppelrollen im ersten Arbeitszustand oder im zweiten Arbeitszustand betrieben werden soll.

Dabei erfolgt eine Festlegung des ersten oder des zweiten Arbeitszustands der Radaufnahme abhängig von wenigstens einer der Kombinationen des dynamischen Zustands des Fahrzeugs sowie des dynamischen Zustands der Einzelrolle oder gekoppelten Doppelrollen der Radaufnahme anhand der Werte nach den Tabellen 1a sowie 1b.

Es ist dabei ersichtlich, dass nicht alle Zellen der Tabellen 1a und 1b sinnvollen Betriebszuständen des Funktionsprüfstandes entsprechen. Insofern können bei der Festlegung der vorderen Absteckung bzw. der hinteren Absteckung einige der Kombinationen der Betriebszustände unberücksichtigt bleiben.

Anspruch 6 betrifft ein Verfahren, das sich auf eine technische Ausgestaltung der Radaufnahme mit einer Doppelrolle bezieht, bei der beide Rollen jeweils mit einer Kupplung an das Antriebssystem angekuppelt werden können. Dabei werden die schaltbaren Kupplungen der Doppelrollen wenigstens einer Radaufnahme des Funktionsprüfstandes so geschaltet, dass eine Rolle frei, d.h. ohne Antrieb läuft und somit nur durch das Fahrzeug angetrieben oder gebremst wird. Dadurch kann im Sinne der Stabilisierung der Schwimmplatte der Radaufnahme das Drehmoment in Bezug auf den ersten oder zweiten Arbeitszustand beeinflusst werden.

Mit der vorliegenden Erfindung können Fahrzeuge (mit Reifen) im simulierten Fahrbetrieb bei weitgehend beliebigen Lenkwinkeln auf einem Funktionsprüfstand geprüft werden.

Dies ist vorteilhaft gegenüber den derzeit bekannten Funktionsprüfständen, bei denen derartige Prüfungen nur bei "Lenkrad in Geradeausstellung" möglich sind. Ein derzeit bekannter Funktionsprüfstand zum Prüfen von Fahrzeugen bei weitgehend beliebigen Lenkwinkeln ist aus der EP 1 596 179 A2 bekannt. Hier findet allerdings eine Adaption des Fahrzeugs ohne Reifen über die Aufnahme des Fahrzeugrades statt.

Die erfindungsgemäße Vorrichtung nach Anspruch 1 besteht vorteilhaft aus folgenden Komponenten:

> ➢ K1: Schaltbare und lenkbare Schwimmplatte

> ➢ K2: Linearantrieb mit Weg- und Kraftmessung

> ➢ K3: Angetriebener Rollensatz auf der Schwimmplatte

> ➢ K4: Messsystem für die Position des Fahrzeugs in Bezug zum Funktionsprüfstand ggf. Fahrwerkgeometriemesssystem

Die Nutzung der Seitenkraft von einem die Reifendrehung antreibenden Rollenpaar zur Positionierung eines Fahrzeugs auf einem Fahrwerkstand ist in der EP 1 143 219 A2 dokumentiert. Im Unterschied zu diesem Patent muss die erfindungsgemäße Radaufnahme bestehend aus den Komponenten K1, K2 und K3 andere und zusätzlichen Anforderungen genügen:

Die Komponente K1 betrifft die Schwimmplatte als solche, die zumindest hinsichtlich des ersten und des zweiten Arbeitszustandes schaltbar sein muss und weiterhin um die sich aus diesen beiden Arbeitszuständen jeweils ergebende vertikale Achse drehbar sein muss. Dabei bleibt die Schwimmplatte in diesen beiden Arbeitszuständen vorteilhaft weiterhin verschiebbar in X-Richtung sowie in Y-Richtung. Lediglich der Freiheitsgrad der Drehung der Schwimmplatte um eine vertikale Achse ist insoweit festgelegt, als die Position der vertikalen Drehachse der Schwimmplatte in der horizontalen Ebene definiert ist.

Die Schwimmplatte muss das Gewicht des Rollensatzes (ggf. mit Antrieb) eines Funktionsprüfstandes und das Gewicht mindestens ¼ des Fahrzeugs tragen, sich frei in einem definierten Bereich der X-,Y-Ebene (horizontalen Ebene) bewegen können und zumindest in den Translationsfreiheitsgraden (X, Y) so fixierbar sein, dass die Achsen x, y, z des Koordinatensystems der Radaufnahme kollinear zu den Achsen X, Y, Z des Funktionsprüfstandes sind. Der Rotationfreiheitsgrad $\phi$ bei beliebigem Winkel fixierbar sein. Eine solche Schwimmplatte mit diesem Klemmmechanismus ist beispielsweise aus der DE 10 2014 111 192 A1 bekannt. Aber auch andere Arten von Schwimmplatten können eingesetzt werden, wenn sie die genannten und erforderlichen Eigenschaften haben.

Die Drehbarkeit der Schwimmplatte ist im Rahmen der vorliegenden Erfindung besonders einfach und kostengünstig möglich, wenn ein Linearantrieb vorhanden ist, der so an der Schwimmplatte angreift, dass mit diesem Linearantrieb sowohl ein Drehmoment um die vertikale Achse des ersten Arbeitszustandes der Schwimmplatte als auch ein Drehmoment um die vertikale Achse des zweiten Arbeitszustandes der Schwimmplatte ausgeübt werden kann. Bei dieser Ausgestaltung ist es vorteilhaft möglich, lediglich einen Linearantrieb vorzusehen. Es ist selbstverständlich auch möglich, mehrere Linearantriebe vorzusehen, die die Drehmomente um die jeweilige vertikale Achse bewirken oder auch andere Antriebe, mit denen die jeweiligen Drehmomente bewirkt werden können.

Bei Verwendung von zwei Linearantrieben in Y-Richtung können diese so zusammenwirken, dass durch ein Fixieren eines der beiden Linearantriebe die Position der vertikalen Drehachse in der horizontalen Ebene definiert wird, wobei mittels des anderen Linearantriebes ein definiertes Drehmoment um diese vertikale Drehachse aufgebracht werden kann.

Der Linearantrieb bzw. die Linearantriebe sind im Sinne der vorliegenden Erfindung die Stellmittel. Diese Komponente(n) K2 können für die Realisierung der vorliegenden Erfindung stärker ausgelegt sein als die in der EP 1 143 219 A2 beschriebenen Antriebe. Außerdem können diese neben der Weg- auch eine Kraftmessung besitzen.

Bei Verwendung von zwei Linearantrieben in $\pm$Y-Richtung kann eine Linearführung in X-Richtung (Längsrichtung eines im Prüfstand befindlichen Fahrzeugs) vor der Schwimmplatte angeordnet sein und die andere hinter der Schwimmplatte. Die Anbindungen an die Schwimmplatte können über je einen festen Bolzen pro Linearantrieb in dem entsprechenden Langloch vorne und hinten in der Schwimmplatte erfolgen. Jedoch ist es auch möglich, lediglich eine Linearführung in X-Richtung vorzusehen mit zwei schaltbaren Bolzen vor und hinter der Schwimmplatte in x-Richtung.

Bei der Komponente K3 handelt es sich um ein angetriebenes Rollensystem auf der Schwimmplatte. Dieses Rollensystem wird von dem Rad im realen Fahrbetrieb beschleunigt oder abgebremst bzw. wird das Rad vom Rollensatz beschleunigt oder abgebremst. Der jeweilige dynamische Zustand hängt davon ab, welche Funktion des Fahrzeugs gerade getestet werden soll. Der Rollensatz kann

➢ eine Doppelrolle sein, wobei beide Rollen der Doppelrolle an einen Antrieb gekoppelt sind ➢ eine Doppelrolle sein, wobei nur eine der Rollen an einen Antrieb gekoppelt ist

➢ eine Doppelrolle sein, wobei jede Rolle der Doppelrolle mit einer schaltbaren Kupplung an einen Antrieb gekoppelt ist oder auch

➢ eine Scheitelrolle sein, die an einem Antrieb gekoppelt ist. Zu dieser Scheitelrolle sind noch Halterollen vorgesehen.

Im Sinne dieser möglichen Ausgestaltungen weist die Radaufnahme wenigstens eine Rolle auf.

Der Antrieb des Rollensatzes kann mit dem Rollensystem auf der Schwimmplatte liegen bzw. mit einer in Bezug auf die Lenkung flexiblen Ankopplung (Kardanwelle) mit dem Rollensystem verbunden sein.

Mit der Komponente K4 (Messsystem für die Position des Fahrzeugs in Bezug zum Funktionsprüfstand ggf. Fahrwerkgeometriemesssystem) wird es möglich, die Drehung der Schwimmplatten mittels der Stellmittel so zu veranlassen, dass die Position des Fahrzeugs im Funktionsprüfstand im Sinne einer Regelung kontrolliert wird. Dabei können Abweichungen des Fahrzeugs von seiner Sollposition durch eine entsprechende Drehung der Schwimmplatten minimiert bzw. ausgeregelt werden.

Anspruch 2 betrifft eine Ausgestaltung der Radaufnahme, bei der die wenigstens eine Rolle der Radaufnahme aus einer Doppelrolle besteht, wobei jede der Rollen über eine schaltbare Kupplung mit einem Antriebssystem verbunden ist.

Dies erweist sich als vorteilhaft zur gezielten Einstellung eines Drehmomentes durch das Schalten einer der beiden Kupplungen.

Die Figuren zeigen:

Fig. 1:   eine Radaufnahme mit einem außenliegenden Antrieb,
Fig. 2:   eine Radaufnahme mit Absteckung vorne
Fig, 3   eine Radaufnahme mit Absteckung hinten.
Fig. 4:   die Seitenkräfte auf den nicht fixierten Linearantrieb der Schwimmplatte,
Fig. 5:   eine Prinzipdarstellung eines Funktionsprüfstandes mit lenkbaren Radaufnahmen unter der Vorderachse eines fixierten Fahrzeugs und
Fig. 6   eine Prinzipdarstellung eines Funktionsprüfstandes mit lenkbaren Radaufnahmen sowohl unter der Vorderachse als auch unter der Hinterachse eines fixierten Fahrzeugs,
Fig. 7:   eine Prinzipdarstellung einer Radaufnahme mit einem Rollensystem, das als Doppelrolle ausgebildet ist, wobei jede der Rollen über eine Kupplung mit dem Antrieb verbunden ist.

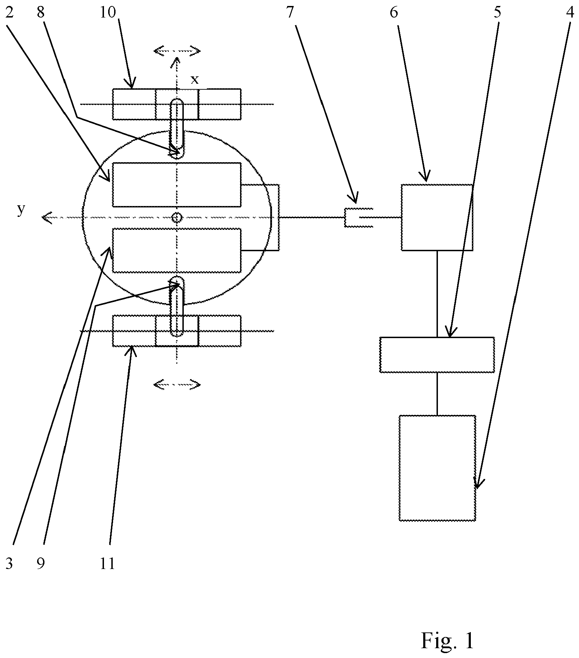

Figur 1 zeigt eine Radaufnahme nach der vorliegenden Erfindung mit einem außenliegenden Antrieb.

Die Figur 1 zeigt eine Radaufnahme nach der vorliegenden Erfindung mit einem Antrieb des Rollensatzes, der von außen an den Rollen 2, 3 der Doppelrolle 1 angreift.

Der Antrieb besteht in dem dargestellten Ausführungsbeispiel aus einem Antriebsmotor 4, der ein elektrischer, pneumatischer oder hydraulischer Motor sein kann, einer Schwungmasse 5 sowie einem Getriebe 6. Abhängig von dem Antriebsmotor 4 kann der Antrieb auch ohne Getriebe 6 ausgestaltet sein. Es ist auch möglich, den Antrieb ohne die Schwungmasse 5 auszugestalten. Es ist noch ein Anpassungselement 7 zu sehen, so dass der Antrieb an die Doppelrollen angekoppelt bleiben kann, wenn die Schwimmplatte gedreht wird. Dieses Anpassungselement 7 kann beispielsweise eine homokinetische Gelenkwelle sein.

Zu der Radaufnahme sind noch die Bolzen 8 und 9 in den Langlöchern vor und hinter der Doppelrolle zu sehen sowie die zugehörigen Linearantriebe 10 und 11. Mit den Linearantrieben 10 bzw. 11 werden die Schwimmplatten gegenüber den Bolzen 8 und 9 in $\pm$Y-Richtung bewegt.

Diese Bewegung erfolgt derart, dass die Schwimmplatte bezüglich eines der Bolzen 8 bzw. 9 fixiert ist. Durch den Linearantrieb an dem anderen Bolzen wird die Schwimmplatte dort seitlich bewegt. Wegen der Fixierung an dem anderen Bolzen dreht sich dadurch die Schwimmplatte. Dabei sind die Bolzen und die Langlöcher mit so ausreichendem Spiel bemessen, dass die Langlöcher zwar in y-Richtung ausgerichtet sind, aber dennoch die Drehung der Schwimmplatte um den anderen Bolzen zulassen.

Figur 1 zeigt somit eine Ausführungsform, bei der Kopplungsmittel 8, 9 jeweils eines Antriebssystems 10, 11 derart in Eingriff mit der Radaufnahme sind, dass über ein Blockieren eines der Antriebssysteme 10, 11 mit gleichzeitiger Betätigung des anderen Antriebssystems 11, 10 der Teil der Schwimmplatte, auf dem die wenigstens eine Rolle gelagert ist, in dem ersten Arbeitszustand oder in dem zweiten Arbeitszustand gedreht wird.

Dabei erweist es sich als vorteilhaft, dass die Kopplungsmittel 8, 9 (in dem dargestellten Ausführungsbeispiel sind dies die Bolzen 8, 9, die in den entsprechenden Langlöchern geführt sind) in Eingriff bleiben. Dadurch wird es insbesondere auch möglich, durch einen Umschaltvorgang der Antriebssysteme 10, 11 von der Betätigungsstellung in die blockierte Stellung und umgekehrt, sofort von dem ersten Arbeitszustand auf den zweiten Arbeitszustand umzuschalten.

Da die die Bolzen 8, 9 in deren Führung in den Langlöchern die Bewegung bei der Drehung des Teils der Schwimmplatte, auf dem die wenigstens eine Rolle gelagert ist, in +X-Richtung ausgleichen, ist es bei dem Ausführungsbeispiel der Figur 1 möglich, einen Linearantrieb 10, 11 zu verwenden als Stellmittel für eine Drehbewegung. Dies erweist sich insofern als vorteilhaft, weil der Linearantrieb konstruktiv einfach ist.

Alternativ zu dem dargestellten Ausführungsbeispiel der Figur 1 kann der Antrieb des Rollensatzes auch in der Radaufnahme selbst integriert sein. Beispielsweise kann der Antrieb auf der Schwimmplatte angeordnet sein. Dadurch wird die Konstruktion vereinfacht, weil das Anpassungselement 7 entfallen kann, wenn sich der Antrieb mit der Schwimmplatte mitdreht. Allerdings erhöhen sich bei dieser Ausgestaltung durch die höhere Masse der Radaufnahme deren Trägheit und insbesondere auch deren Trägheitsmoment, so dass die Dynamik der Nachführung der Radaufnahme bei Lenkbewegungen der Räder nachteilig beeinflusst wird.

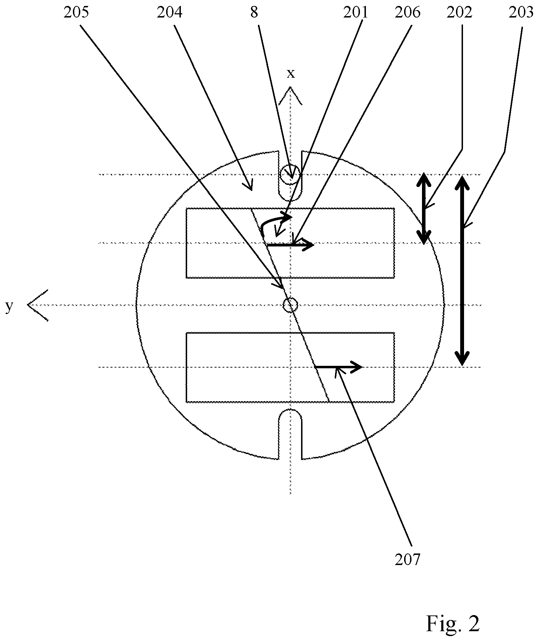

Figur 2 zeigt eine Radaufnahme mit Absteckung vorne. Die Radaufnahme regelt sich passiv auf $\alpha = 0$ in Bezug auf diese Randbedingung von Rollensystem und Rad ein.

Dabei ist das Rad fixiert, dreht vorwärts und treibt beide Rollen an. Mit dem Bezugszeichen 201 ist ein Winkel $\alpha > 0$ bezeichnet. Mit der Bezugsziffer 202 ist die Größe $d_v$ bezeichnet, mit der Bezugsziffer 203 die Größe $d_h$.

Die Schwimmplatte 204 ist um den Bolzen 8 im vorderen Langloch drehbar. Im hinteren Langloch befindet sich kein Bolzen, so dass die Schwimmplatte um den Bolzen 8 drehbar ist.

Mit der Bezugsziffer 205 ist die Projektion der Radmittelebene auf die x-y-Ebene der Radaufnahme bezeichnet.

Weiterhin ist mit der Bezugsziffer 206 die vom Reifen auf die vordere Rolle wirkende Seitenkraft $F_{yv}$ bezeichnet und mit der Bezugsziffer 207 die vom Reifen auf die hintere Rolle wirkende Seitenkraft $F_{yh}$.

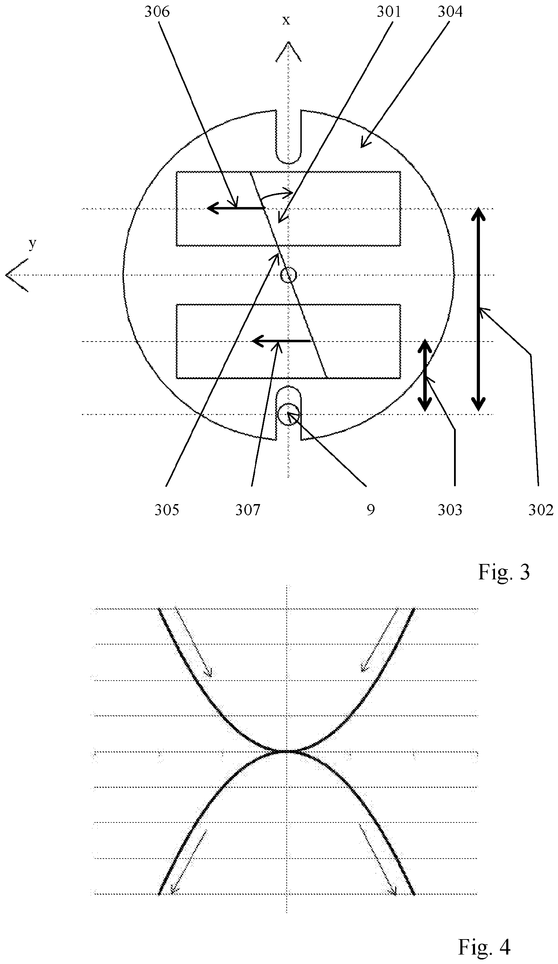

Figur 3 zeigt eine Radaufnahme mit Absteckung hinten. Die Radaufnahme regelt sich passiv auf $\alpha = 0$ in Bezug auf diese Randbedingung von Rollensystem und Rad ein.

Dabei ist das Rad fixiert, dreht vorwärts und wird von beiden Rollen angetrieben. Mit dem Bezugszeichen 301 ist ein Winkel $\alpha > 0$ bezeichnet. Mit der Bezugsziffer 302 ist die Größe $d_v$ bezeichnet, mit der Bezugsziffer 303 die Größe $d_h$.

Die Schwimmplatte 304 ist um den Bolzen 9 im hinteren Langloch drehbar. Im vorderen Langloch befindet sich kein Bolzen, so dass die Schwimmplatte um den Bolzen 9 drehbar ist.

Mit der Bezugsziffer 305 ist die Projektion der Radmittelebene auf die x-y-Ebene der Radaufnahme bezeichnet.

Weiterhin ist mit der Bezugsziffer 306 die vom Reifen auf die vordere Rolle wirkende Seitenkraft $F_{yv}$ bezeichnet und mit der Bezugsziffer 307 die vom Reifen auf die hintere Rolle wirkende Seitenkraft $F_{yh}$.

Figur 4 zeigt die Seitenkräfte auf den nicht fixierten Linearantrieb der Schwimmplatte. Aufgetragen ist die Seitenkraft über dem Winkel $\alpha$.

Die obere Parabel zeigt einen stabilen Verlauf, der in einen Gleichgewichtszustand übergeht, d.h. auf einen Winkel $\alpha = 0$ zuläuft. Für die obere Parabel gilt: $\alpha * M > 0$

Die untere Parabel zeigt einen instabilen Verlauf, der von dem Gleichgewichtszustand weggeht, d.h. von dem Winkel $\alpha = 0$ wegläuft. Für die untere Parabel gilt: $\alpha * M < 0$

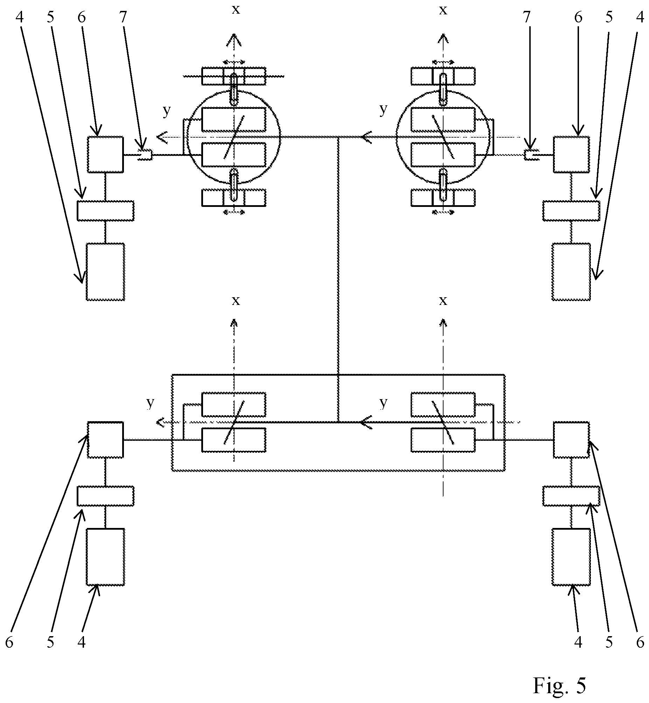

Figur 5 zeigt eine Prinzipdarstellung eines Funktionsprüfstandes mit lenkbaren Radaufnahmen unter der Vorderachse eines Fahrzeugs, das als fixiert angenommen werden soll. Wie bereits ausgeführt kann das Fahrzeug fixiert werden, indem das Fahrzeug mechanisch festgehalten wird. Das Fahrzeug kann auch im Sinne der vorliegenden Erfindung als fixiert betrachtet werden, wenn die Dynamik der Bewegungen der Radaufnahmen so schnell ist, das Zustände, die Kräfte auf das Fahrzeug ausüben im Sinne eines seitlichen Wegdriftens des Fahrzeugs durch die Drehung der Radaufnahmen bereits ausgeregelt und eliminiert sind, bevor das seitliche Wegdriften des Fahrzeugs einsetzt. Die hierfür erforderliche Dynamik der Bewegung der Radaufnahmen steht dabei in direktem Zusammenhang mit der Trägheit des Fahrzeugs.

Es sind wieder die Teile der Antriebe zu sehen, die bereits im Zusammenhang mit Figur 1 erläutert wurden. Dabei müssen bei den Antrieben an der Hinterachse (wegen der nichtlenkbaren Räder der Hinterachse) in dem Ausführungsbeispiel der Figur 5 keine Anpassungselemente 7 vorgesehen werden.

Für die folgende Beschreibung der Erfindung besteht die Radaufnahme ohne Einschränkung der Allgemeinheit aus der Komponente K3, die hier als ein angetriebenes Rollensystem als Doppelrolle ausgestaltet ist. In dem Ausführungsbeispiel sind beide Rollen an einen Antrieb gekoppelt, der nicht auf der Schwimmplatte ist, also von außen angekoppelt ist. Außerdem ist als Komponente K2 zwei Linearantriebe vorhanden. Jeweils einer der Linearantriebe in $\pm$Y-Richtung ist vor und einer hinter der Schwimmplatte angeordnet. Die Linearantriebe sind weiterhin mit einer Messeinrichtung zur Kraft- und Wegmessung ausgestallt. Die Komponente K1 besteht in dem Ausführungsbeispiel aus einer Schwimmplatte entsprechend der DE 10 2014 111 192 A1.

Nachfolgend soll die Seitenkraft vom Rad (Reifen) auf die Rollen erläutert werden. Hierzu soll ein gekoppeltes Rollenpaar, d.h. die beide angetrieben Rollen, gebremst werden oder frei drehen können.

Das Rollenpaar steht auf einer Schwimmplatte, die über einen Bolzen im einem vorderen (x>0) oder hinteren (x<0) Langloch abgesteckt sein kann, d.h., dass der Bolzen eine feste Drehachse in vertikaler Richtung vorne oder hinten für die Radaufnahme darstellt.

Die y-Achse des x, y- Koordinatensystems der Radaufnahme ist durch die Rollenachsen bestimmt. Auf dem Rollenpaar dreht ein Rad und die Projektion der Radmittelebene schließt mit der x-Achse der Radaufnahme (des Rollenpaars) den Winkel $\alpha$ ein.

Wenn das Rad vorwärts dreht, drehen die Rollen rückwärts. Vorwärtsdrehung soll hier so definiert sein, dass das drehende Objekt entgegen dem Uhrzeigersinn um seine Drehachse (die y-Achse) dreht, gemäß der Definition der Figur 1.

Nachfolgend soll das Rad als fixiert und die Radaufnahme in der Auflageebene der Schwimmplatte als frei beweglich angesehen werden.

In dem Fall, dass das Rad beide Rollen antreibt, wirkt in dem in Figur 2 dargestellten Fall auf jede Rolle eine gleiche Seitenkraft $F_y$ in negativer y-Richtung für $\alpha$>0.

Die Absteckung vorne erzeugt das Drehmoment M mit

$$M = -(d_v + d_h) * F_y \qquad (1)$$

wobei $d_v$ der x-Abstand der vorderen Rolle zur Absteckung (d.h. der Position der vertikalen Drehachse) und $d_h$ der x-Abstand der hinteren Rolle zur Absteckung ist. Da die Seitenkräfte $F_y$ negativ sind für $\alpha > 0$, ist somit das Drehmoment M positiv.

Somit dreht sich die Radaufnahme, wenn die Reibung der Schwimmplatte das zulässt, so lange, bis der Winkel $\alpha$ Null ist und somit ein stabiles Gleichgewicht erreicht ist.

Für $\alpha < 0$ sind die Seitenkräfte $F_y$ positiv und somit das Drehmoment negativ: Auch in diesem Fall dreht die Schwimmplatte, wenn die Reibung der Schwimmplatte das zulässt, bis der Winkel $\alpha$ Null ist und somit ein stabiles Gleichgewicht erreicht ist.

Es gilt in diesem Fall (Rad treibt Rollen an) bei Absteckung vorne:

$$\alpha > 0,\ F_y < 0\ \text{und}\ M = -(d_v + d_h) * F_y > 0 \qquad (2)$$

$$\alpha < 0,\ F_y > 0\ \text{und}\ M = -(d_v + d_h) * F_y < 0 \qquad (3)$$

In dem Fall, dass beide Rollen das Rad antreiben, wirkt auf jede Rolle eine Seitenkraft $F_y$ in positiver y-Richtung für $\alpha > 0$. Die Verhältnisse sind in Figur 3 dargestellt. Die Absteckung hinten erzeugt das Drehmoment M mit

$$M = (d_v + d_h) * F_y \qquad (4)$$

wobei $d_v$ der x-Abstand der vorderen Rolle zur Absteckung und $d_h$ der x-Abstand der hinteren Rolle zur Absteckung ist.

Da die Seitenkräfte $F_y$ positiv sind, ist somit das Drehmoment M positiv. Somit dreht sich die Radaufnahme, wenn die Reibung der Schwimmplatte das zulässt, so lange, bis der Winkel $\alpha$ Null ist und somit ein stabiles Gleichgewicht erreicht ist. Für $\alpha < 0$ sind die Seitenkräfte $F_y$ negativ und somit das Drehmoment negativ und auch in diesem Fall dreht die Schwimmplatte, wenn die Reibung der Schwimmplatte das zulässt, bis der Winkel $\alpha$ Null ist und somit ein stabiles Gleichgewicht erreicht ist.

Es gilt in diesem Fall (Rollen treiben das Rad an) bei Absteckung hinten:

$$\alpha > 0, \; F_y > 0 \; \text{und} \; M = (d_v + d_h) \, * \, F_y > 0 \qquad (5)$$

$$\alpha < 0, \; F_y < 0 \; \text{und} \; M = (d_v + d_h) \, * \, F_y < 0 \qquad (6)$$

In Bezug auf den dynamischen Zustand von Rad und Rollensystem sind die Vorzeichen der Seitenkräfte unterschiedlich.

Diese Vorzeichen der Seitenkräfte lassen sich bei der Bewegung der Schwimmplatten mittels der Stellmittel berücksichtigen, indem die Absteckung vorne oder hinten aktiviert wird. Mit dieser Vorgehensweise lässt sich ein stabiles Gleichgewicht bei $\alpha = 0$. Es ist möglich, eine passiv einregelnde Radaufnahme unter der Randbedingung kleiner Reibung der Schwimmplatte zu erhalten.

Allgemein gilt Folgendes:

Die Radaufnahme besitzt bei $\alpha = 0$ ein stabiles Gleichgewicht, wenn für das resultierende Drehmoment M, das aus der Lage der Absteckung (vorne oder hinten) und den auftretenden Seitenkräften $F_y$ berechnet wird, gilt:

$$\alpha \, * \, M > 0 \qquad (7)$$

Im Fall $\alpha \, * \, M < 0$ liegt bei $\alpha = 0$ ein labiles Gleichgewicht vor.

Mit der vorliegenden Erfindung lässt sich erreichen, dass die Radaufnahme so gesteuert bzw. geregelt werden kann, dass ein stabiles Gleichgewicht bei $\alpha = 0$ in Abhängigkeit des Betriebszustandes des Rollensystems und des Fahrzeuges und damit des Rades gewährleistet werden kann.

Hierzu soll die Seitenkraft auf eine Rolle mit einem fixierten Rad betrachtet werden, wobei die Mittelebene des Rades einen Winkel $\alpha$ zur x-Ache der Rolle unter den Bedingungen des fahrenden Fahrzeugs auf einem Funktionsprüfstand hat.

Die Betriebszustände des Rades sind:

➢ Rad treibt Rolle oder
➢ Rad bremst Rolle

Die Betriebszustände der Rolle sind:

➢ Rolle treibt Rad an oder
➢ Rolle bremst Rad

Die dynamischen Zustände der Rolle sind aus der Motorsteuerung des Funktionsprüfstandes bekannt. Die dynamischen Zustände des Fahrzeuges und damit des Rades sind über die Kommunikation mit den Steuergeräten des Fahrzeugs bekannt, insbesondere wenn das Fahrzeug autonom auf dem Funktionsprüfstand gefahren wird. Die Kommunikation kann in der laufenden Produktion erfolgen, indem die Daten der Steuergeräte des Fahrzeugs abgefragt werden und in der Datenverarbeitung des Produktionsprozesses zur Verfügung stehen. Dies kann beispielsweise über einen zentralen Leitrechner in der Produktion erfolgen, der diese Daten wiederum dezentral an die entsprechenden Stellen in der Produktionslinie weitergibt.

In Abhängigkeit von den dynamischen Zuständen von Rad und Rolle gilt für die auf die Rolle wirkende Seitenkraft:

$$F_y = c \, * \, \alpha \, * \, S \qquad (8)$$

Die Größe "S" ist dabei eine betragsmäßige Zusammenfassung aller Kräfte. Diese Kräfte betreffen die Größe der Seitenkraft in Abhängig von der Reibung zwischen Reifen und Rolle und den auftretenden Antriebs- oder Bremskräften von Rolle und Rad. Damit kann die Kraft $F_y$ interpretiert werden als proportional zum Lenkwinkel $\alpha$ und proportional zu der Größe c, mit c = 1 oder c = -1 in Abhängigkeit von den dynamischen Zuständen von Rolle und Rad gemäß der Tabelle la und 1b.

Für den Fall "Absteckung vorne" ergibt sich durch Einsetzen von (8) in (1) für das Drehmoment:

$$M = - c * (d_v + d_h) * \alpha * S \qquad (9)$$

Einsetzen von (9) in die Stabilitätsbedingung (7) $\alpha * M > 0$ ergibt:

$$\alpha * M = - c * (d_v + d_h) * \alpha^2 * S \qquad (10)$$

Somit ist $\alpha * M > 0$ wenn c = -1 ist.

Für den Fall "Absteckung hinten" ergibt sich durch Einsetzen von (8) in (4) für das Drehmoment:

$$M = c * (d_v + d_h) * \alpha * S \qquad (11)$$

Einsetzen von (11) in die Stabilitätsbedingung (7) $\alpha * M > 0$ ergibt:

$$\alpha * M = c * (d_v + d_h) * \alpha^2 * S \qquad (12)$$

Somit ist $\alpha * M > 0$ wenn c = 1 ist.

Tabelle 1a:

| | Rad dreht vorwärts, $\alpha > 0$ | Dynamischer Zustand der Rolle | | Dynamischer Zustand des Fahrzeugs | |
|---|---|---|---|---|---|
| Fall | c - Vorzeichen Seitenkraft | Rolle treibt Rad an | Rolle bremst Rad | Rad treibt Rolle an | Rad bremst Rollen |
| 1 | + | X | | | |
| 2 | - | | X | | |
| 3 | - | | | X | |
| 4 | + | | | | X |
| 5 | + / - | X | | X | |
| 6 | + | X | | | X |
| 7 | - | | X | X | |
| 8 | + / - | | X | | X |

Tabelle 1b:

| | Rad dreht rückwärts, $\alpha > 0$ | Dynamischer Zustand der Rolle | | Dynamischer Zustand des Fahrzeugs | |
|---|---|---|---|---|---|
| Fall | c - Vorzeichen Seitenkraft | Rolle treibt Rad an | Rolle bremst Rad | Rad treibt Rolle an | Rad bremst Rollen |
| 1 | - | X | | | |
| 2 | + | | X | | |
| 3 | + | | | X | |
| 4 | - | | | | X |
| 5 | + / - | X | | X | |

(fortgesetzt)

|  | Fall | c - Vorzeichen Seitenkraft | Dynamischer Zustand der Rolle | | Dynamischer Zustand des Fahrzeugs | |
| --- | --- | --- | --- | --- | --- | --- |
|  |  | Rad dreht rückwärts, $\alpha > 0$ | Rolle treibt Rad an | Rolle bremst Rad | Rad treibt Rolle an | Rad bremst Rollen |
|  | 6 | - | X |  |  | X |
|  | 7 | + |  | X | X |  |
|  | 8 | + / - |  | X |  | X |

Dabei gilt:

➢ $\alpha$ - Winkel der Projektion der Radmittelebene in die x, y - Ebene

➢ c - Vorzeichen der Seitenkraft vom Reifen auf die Rolle in y-Richtung des Rollen-Koordinatensystems

Ist in den beiden Tabellen in einer Zelle kein Eintrag, bedeutet dies, dass die Rolle bzw. das Rad als frei drehend zu betrachten sind.

Soweit in den Tabellen 1a und 1b zwei mögliche Vorzeichen + / - für einen Betriebszustand angegeben sind, hängt das Vorzeichen davon ab, ob der Betriebszustand der Rolle oder des Rades stärker ist und damit die Situation "dominiert".

Die Tabellen 1a und 1b zeigen jeweils 6 dynamische Zustände von Fahrzeug und Antriebsystem, bei denen die Radaufnahme - entsprechend dem Vorzeichen von c - mit Fixierung (Absteckung) im Langloch vorne oder hinten der Stabilitätsbedingung $\alpha * M > 0$ genügt.

Für die Fälle c = -1 muss die Absteckung vorne erfolgen, für die Fälle c = 1 muss die Absteckung hinten erfolgen.

Im den Fällen 5 und 8 der Tabellen 1a und 1b ist mit dieser Betrachtung nicht zu entscheiden, welches Vorzeichen c besitzt und damit die Fixierung des Langlochs der Radaufnahme vorne oder hinten erfolgen soll. Also kann in diesen Fällen die Situation auftreten:

$$\alpha * M < 0$$

Befindet sich die gekoppelte Doppelrolle der Radaufnahme sowie das Rad in den dynamischen Zuständen, die den Fällen 5 und 8 der Tabellen 1a und 1b entsprechen, so lässt sich durch die Entkopplung einer Rolle mit geeigneter Festlegung des ersten oder zweiten Arbeitszustandes wieder die Situation $\alpha * M > 0$ herstellen. Die Entkopplung einer Rolle bedeutet dabei, dass die Kupplung geöffnet wird, die dieser Rolle zugeordnet ist. Diese Rolle wird damit vom Antriebssystem getrennt. Die Kupplung, die der anderen Rolle zugeordnet ist, bleibt geschlossen, so dass diese Rolle mit dem Antriebssystem verbunden bleibt.

Zur Erläuterung dieser Stabilisierung durch Entkopplung einer Rolle sollbeispielhaft der Fall betrachtet werden, dass das Rad durch den Fahrzeugantrieb und durch den Antrieb des Funktionsprüfstands beschleunigt wird, um zur Erreichung einer bestimmten Geschwindigkeit des Rades Zeit zu sparen. Unter der Randbedingung, dass $\alpha>0$ gilt und die Radaufnahme im ersten Arbeitszustand (d.h. Linearantrieb vorne fixiert) ist, befinden sich beide gekoppelten Rollen im Fall 5 der Tabelle 1a und es gilt: $M = -(d_v + d_h) * F_y$ nach (1), wobei $F_y = F_{yv} = F_{yh}$ positiv oder negativ sein kann. Wird aber die hintere Rolle entkoppelt, so befindet sich die vordere Rolle im Fall 5 nach Tabelle 1a, die hintere Rolle im Fall 3 nach Tabelle 1a und es gilt: $M = -d_v * F_{yv} - d_h * F_{yh} > 0$, da $d_h > d_v$, $|F_{yh}| > |F_{yv}|$ und $F_{yh} < 0$
Somit ist die stabile Situation $\alpha * M > 0$ durch Entkopplung einer Rolle hergestellt

Im Folgenden soll ein Funktionsprüfstand betrachtet werden, auf dem ein fixiertes Fahrzeug fährt. Der Funktionsprüfstand hat feste Radaufnahmen unter der Hinterachse und lenkbare Radaufnahmen unter der Vorderachse.

Die Lenkung erzeugt den Winkel $\alpha_1$ auf der linken lenkbaren Radaufnahme und den Winkel $\alpha_r$, auf der rechten lenkbaren Radaufnahme. Jede der lenkbaren Radaufnahme kann um den Winkel $\phi_r$, bzw. $\phi_l$ um die Z-Achse des Funktionsprüfstandes gedreht werden, so dass die Achsen der Radaufnahmen kollinear mit den Radachsen der Vorderräder sind, d.h.:

$\alpha_l = 0$ und $\alpha_r = 0$, unabhängig von der Stellung des Lenkrades.

Zur Darstellung der Funktion wird dieser Prozess der Ausrichtung an der rechten lenkbaren Radaufnahme beschrieben, also $\alpha = \alpha_r$ und $\phi = \phi_r$.

In Bezug zum dynamischen Zustand der beiden gekoppelten Rollen und des Fahrzeugs wird der vordere bzw. der hintere Linearantrieb gemäß dem Vorzeichen von c in den Fällen 1, 2, 3, 4, 6 und 7 von Tabelle la bzw. 1b fixiert. Durch die Fixierung des jeweiligen Linearantriebes wird die jeweilige Absteckung aktiviert, d.h. die jeweilige Drehachse der Schwimmplatte festgelegt. Dies gilt für das Ausführungsbeispiel mit den gezeigten zwei Linearantrieben.

Damit ist die Stabilitätsbedingung α * M > 0 erfüllt und der andere Linearantrieb misst die Richtung der wirkenden Kraft

$$2 * F_y * \cos(\phi) \text{ in } \pm Y\text{-Richtung}$$

und erzeugt eine Kraft $F_{LA}$ in Richtung der wirkenden Kraft
$2 * F_y * \cos(\phi)$, so dass die Reibung der Schwimmplatte μ * G überwunden wird. G umfasst die Gewichtskraft der Radaufnahme plus des Teils der Gewichtskraft des Fahrzeugs, das auf die Radaufnahme wirkt. Die Ausrichtung der Radaufnahme auf das gelenkte Rad erfolgt, wenn gilt:

$$2 * |F_y| * \cos(\phi) + |FLA| >= \mu * G \qquad (13)$$

wenn α * M > 0.

Ist in den Fällen 5 und 8 von Tabelle 1a oder 1b die Stabilitätsbedingung bei gekoppelten Rollen nicht erfüllt und es gilt: α * M < 0, dann wird ebenfalls ein Linearantrieb vorne oder hinten fixiert.

Der andere Linearantrieb misst die Richtung der wirkenden Kraft

$$2 * F_y * \cos(\phi) \text{ in } \pm Y\text{-Richtung}$$

und erzeugt eine Gegenkraft $F_{LA}$ entgegen der Richtung der wirkenden Kraft
$2 * F_y * \cos(\phi)$ und der Reibung der Schwimmplatte μ * G. Die Ausrichtung der Radaufnahme auf das gelenkte Rad erfolgt, wenn gilt:

$$|F_{LA}| >= \mu * G + 2 * |F_y| * \cos(\phi) \qquad (14)$$

wenn α * M < 0 ist.

Die korrekte Ausrichtung der lenkbaren Radaufnahme ist erreicht, wenn die Kraftmessung auf dem nicht fixierten Linearantrieb den Wert Null misst, d.h.:

$$2 * F_y * \cos(\phi) = 0$$

Alternativ kann die Regelung beispielsweise auch über die Messung des Winkels α in Bezug zur Radaufnahme erfolgen. Hierzu muss jede lenkbare Radaufnahme über ein solches Messsystem verfügen.

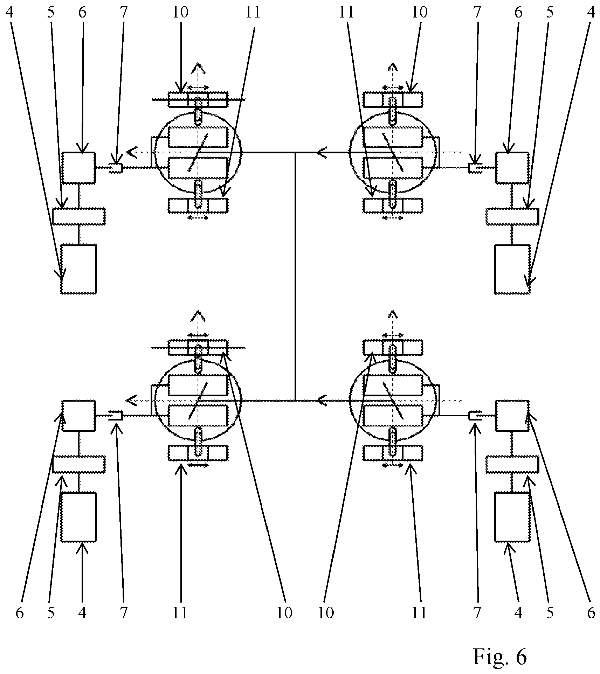

Figur 6 zeigt eine Prinzipdarstellung eines Funktionsprüfstandes mit lenkbaren Radaufnahmen sowohl unter der Vorderachse als auch unter der Hinterachse eines fixierten Fahrzeugs. Das Fahrzeug kann hierbei wiederum als fixiert angesehen werden, wenn die Radaufnahmen so schnell bewegt werden, dass Kräfte von der Radaufnahme auf das Fahrzeug bereits eliminiert sind bevor das Fahrzeug seitlich wegdriftet. Alternativ kann das Fahrzeug auch fixiert sein, indem dieses mechanisch festgehalten wird.

Die im Zusammenhang mit Figur 5 beschriebenen Verhältnisse gelten bei dem Ausführungsbeispiel der Figur 6 entsprechend auch für die Radaufnahmen, die sich unter der Hinterachse des Fahrzeugs befinden.

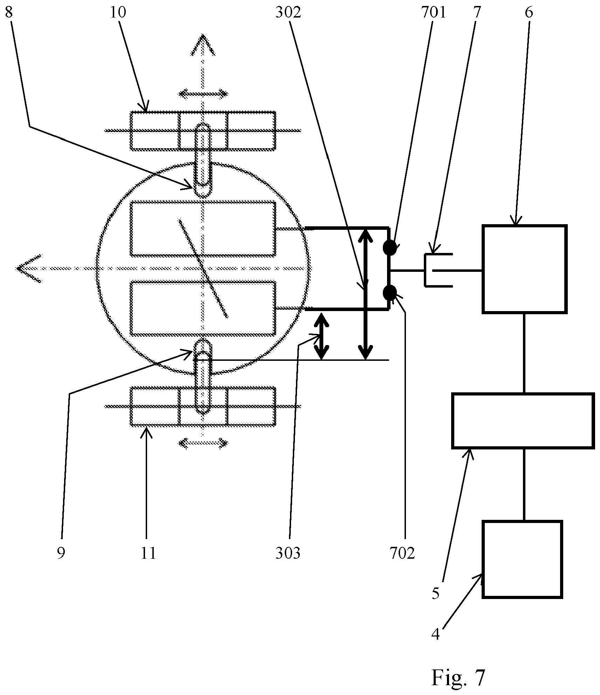

Figur 7 zeigt eine Prinzipdarstellung einer Radaufnahme mit einem Rollensystem, das als Doppelrolle ausgebildet ist. Es ist zu sehen, dass das Antriebssystem, das in dem Ausführungsbeispiel der Figur 7 aus dem Antrieb 4, der Schwungmasse 5, dem Getriebe 6 sowie dem Ausgleichselement 7 besteht, zu jeder der beiden Rollen ankuppelbar bzw. lösbar ist mittels einer Kupplung 701 bzw. 702.

Der Figur 7 lässt sich durch die eingezeichneten Abstände der Achsen der jeweiligen Rollen zur hinteren Absteckung in dem Langloch 9 (Abstand $d_v$ mit der Bezugsziffer 302 für die "vordere" Rolle sowie Abstand $d_h$ mit der Bezugsziffer 303 für die "hintere" Rolle).

In den obigen Tabellen 1a und 1b gibt es dynamische Zustände des Rades und des Rollensystems, die mit der zunächst noch allgemeinen Angabe, dass sowohl das Rad die Rolle(n) antreibt (bzw. bremst) als auch die Rolle(n) das jeweilige Rad antreiben (bzw. bremsen) noch nicht eindeutig definiert sind.

Durch ein geeignetes Schaltern der Kupplungen 701 und 702 lassen sich die Verhältnisse im Sinne einer eindeutigeren Festlegung klären, ob die Absteckung vorne oder hinten erfolgen soll.

**Patentansprüche**

1. Radaufnahme für einen Funktionsprüfstand für Kraftfahrzeuge mit lenkbaren Rädern, wobei die Radaufnahme eine Schwimmplatte aufweist, sowie wenigstens eine auf der Schwimmplatte gelagerte und mit der Schwimmplatte in horizontaler Ebene bewegbare Rolle, **dadurch gekennzeichnet, dass** die Radaufnahme einen ersten Arbeitszustand aufweist, in dem der Teil der Schwimmplatte, auf dem die wenigstens eine Rolle gelagert ist, um eine vertikale Achse (8) drehbar gelagert ist, die bezogen auf die Fahrtrichtung eines im Rollenprüfstand befindlichen Fahrzeugs vor dem wenigstens einen Radaufstandspunkt auf der wenigstens einen Rolle der Radaufnahme liegt, dass die Radaufnahme einen zweiten Arbeitszustand aufweist, in der der Teil der Schwimmplatte, auf dem die wenigstens eine Rolle gelagert ist, um eine vertikale Achse (9) drehbar gelagert ist, die bezogen auf die Fahrtrichtung eines im Rollenprüfstand befindlichen Fahrzeugs hinter dem wenigstens einen Radaufstandspunkt auf der wenigstens einen Rolle der Radaufnahme liegt, und dass der Schwimmplatte Stellmittel (10, 11) zugeordnet sind zur Drehung des Teils der Schwimmplatte, auf dem die wenigstens eine Rolle gelagert ist, in dem ersten sowie dem zweiten Arbeitszustand um die entsprechende vertikale Achse (8, 9).

2. Radaufnahme nach Anspruch 1, **dadurch gekennzeichnet, dass** die wenigstens eine Rolle der Radaufnahme aus einer Doppelrolle besteht, wobei jede der Rollen über eine schaltbare Kupplung (701, 702) mit einem Antriebssystem (4, 5, 6) verbunden ist.

3. Radaufnahme nach Anspruch 1 oder 2, **dadurch gekennzeichnet, dass** Kopplungsmittel (8; 9) jeweils eines Antriebssystems (10; 11) derart in Eingriff mit der Radaufnahme sind, dass über ein Blockieren eines der Antriebssysteme (10; 11) mit gleichzeitiger Betätigung des anderen Antriebssystems (11; 10) der Teil der Schwimmplatte, auf dem die wenigstens eine Rolle gelagert ist, in dem ersten Arbeitszustand oder in dem zweiten Arbeitszustand gedreht wird.

4. Verfahren zur Ansteuerung der Stellmittel einer Schwimmplatte nach einem der Ansprüche 1 bis 3, **dadurch gekennzeichnet, dass** der Teil der Schwimmplatte, auf dem die wenigstens eine Rolle gelagert ist, mittels der Stellmittel derart in eine Sollposition gedreht wird, dass die Achse der wenigstens eine Rolle der Radaufnahme parallel verläuft zu einer Projektion der Radachse des auf der wenigstens einen Rolle aufstehenden Rades in vertikaler Richtung in die horizontale Ebene, wobei die Drehung in dem ersten Arbeitszustand der Schwimmplatte oder in dem zweiten Arbeitszustand der Schwimmplatte erfolgt, abhängig von der Richtung und Stärke eines Lenkeinschlags des Fahrzeugrades, sowie abhängig davon, ob das Fahrzeugrad die wenigstens eine Rolle antreibt oder bremst bzw. von der wenigstens einen Rolle angetrieben oder gebremst wird.

5. Verfahren nach Anspruch 4, **dadurch gekennzeichnet, dass** eine Festlegung des ersten oder des zweiten Arbeitszustands der Radaufnahme mit einer Rolle bzw. mit gekoppelten Doppelrollen abhängig von wenigstens einer der nachfolgenden Kombinationen des dynamischen Zustands des Fahrzeugs sowie des dynamischen Zustands der einzelnen Rolle bzw. der gekoppelten Doppelrollen der Radaufnahme anhand folgender Werte erfolgt:

| | Rad dreht vorwärts, $\alpha > 0$ | Dynamischer Zustand der Rolle | | Dynamischer Zustand des Fahrzeugs | |
|---|---|---|---|---|---|
| Fall | c - Vorzeichen Seitenkraft | Rolle treibt Rad an | Rolle bremst Rad | Rad treibt Rolle an | Rad bremst Rollen |
| 1 | + | X | | | |
| 2 | - | | X | | |
| 3 | - | | | X | |
| 4 | + | | | | X |
| 5 | + / - | X | | X | |
| 6 | + | X | | | X |
| 7 | - | | X | X | |
| 8 | + / - | | X | | X |

| | Fall | Rad dreht rückwärts, $\alpha > 0$ | Dynamischer Zustand der Rolle | | Dynamischer Zustand des Fahrzeugs | |
|---|---|---|---|---|---|---|
| | | c - Vorzeichen Seitenkraft | Rolle treibt Rad an | Rolle bremst Rad | Rad treibt Rolle an | Rad bremst Rollen |
| | 1 | - | X | | | |
| | 2 | + | | X | | |
| | 3 | + | | | X | |
| | 4 | - | | | | X |
| | 5 | + / - | X | | X | |
| | 6 | - | X | | | X |
| | 7 | + | | X | X | |
| | 8 | + / - | | X | | X |

wobei der erste Arbeitszustand festgelegt wird, wenn der Wert c einen negativen Wert hat (-), und wobei der zweite Arbeitszustand festgelegt wird, wenn der Wert c einen positiven Wert hat (+).

6. Verfahren nach Anspruch 4 oder 5 in weiterer Rückbeziehung auf die Ausgestaltung nach Anspruch 2, **dadurch gekennzeichnet, dass** die schaltbaren Kupplungen (701, 702) wenigstens einer Radaufnahme des Funktionsprüfstandes geschaltet werden im Sinne einer gezielten Einstellung des Drehmomentes der Schwimmplatte der Radaufnahme in Bezug auf den ersten oder zweiten Arbeitszustand.

**Claims**

1. Wheel receptacle for a vehicle test bench for motor vehicles having steerable wheels, wherein the wheel receptacle comprises a floating plate as well as at least one roller supported on the floating plate and movable with the floating plate in a horizontal plane, **characterized in that** the wheel receptacle has a first working state, in which the part of the floating plate, on which the at least one roller is supported, is rotatably supported around a vertical axis (8), which is located ahead of the at least one wheel contact point on the at least one roller of the wheel receptacle with respect to the driving direction of a vehicle located in the roller test bench, **in that** the wheel receptacle has a second working state, in which the part of the floating plate, on which the at least one roller is supported, is rotatably supported around a vertical axis (9) which is located behind the at least one wheel contact point on the at least one roller of the wheel receptacle with respect to the driving direction of a vehicle located in the roller test bench, and **in that** actuators (10, 11) are assigned to the floating plate for rotating the part of the floating plate, on which the at least one roller is supported, around the corresponding vertical axis (8, 9) in the first as well as in the second working state.

2. Wheel receptacle according to claim 1, **characterized in that** the at least one roller of the wheel receptacle consists of a double roller, wherein each of the rollers is connected to a drive system (4, 5, 6) via a switchable coupling (701, 702).

3. Wheel receptacle according to claim 1 or 2, **characterized in that** coupling means (8; 9) of in each case one drive system (10; 11) are engaged with the wheel receptacle in such a way, that by blocking one of the drive systems (10; 11) with simultaneous actuation of the other drive system (11; 10), the part of the floating plate, on which the at least one roller is supported, is rotated in the first working state or the second working state.

4. A method for actuating the actuators of a floating plate according to one of claims 1 to 3, **characterized in that** the part of the floating plate, on which the at least one roller is supported, is rotated to a target position using the actuators in such a way that the axis of the at least one roller of the wheel receptacle runs parallel to a projection of the wheel axle of the wheel standing on the at least one roller in vertical direction into the horizontal plane, wherein the rotation is effected in the first working state of the floating plate or in the second working state of the floating plate, depending on the direction and magnitude of a steering angle of the vehicle wheel, as well as depending on whether the vehicle wheel drives or brakes the at least one roller, or is driven or braked by the at least one roller.

5. Method according to claim 4,
**characterized in that** setting of the first or the second working state of the wheel receptacle with one roller or with coupled double rollers is effected depending on at least one of the following combinations of the dynamic state of the vehicle as well as the dynamic state of the individual roller or the coupled double rollers of the wheel receptacle, according to the following values:

| | Wheel rotates forward, $\alpha > 0$ | Dynamic state of the roller | | Dynamic state of the vehicle | |
|---|---|---|---|---|---|
| Case | c - sign of the lateral force | Roller drives wheel | Roller brakes wheel | Wheel drives roller | Wheel brakes rollers |
| 1 | + | X | | | |
| 2 | - | | X | | |
| 3 | - | | | X | |
| 4 | + | | | | X |
| 5 | + / - | X | | X | |
| 6 | + | X | | | X |
| 7 | - | | X | X | |
| 8 | + / - | | X | | X |

| | Wheel rotates backward, $\alpha > 0$ | Dynamic state of the roller | | Dynamic state of the vehicle | |
|---|---|---|---|---|---|
| Case | c - sign of the lateral force | Roller drives wheel | Roller brakes wheel | Wheel drives roller | Wheel brakes rollers |
| 1 | - | X | | | |
| 2 | + | | X | | |
| 3 | + | | | X | |
| 4 | - | | | | X |
| 5 | + / - | X | | X | |
| 6 | - | X | | | X |
| 7 | + | | X | X | |
| 8 | + / - | | X | | X |

wherein the first working state is set when the value c has a negative value (-), and wherein the second working state is set when the value c has a positive value (+).

6. Method according to claim 4 or 5 with further reference to the configuration according to claim 2,
**characterized in that** the switchable couplings (701, 702) of at least one wheel receptacle of the vehicle test bench are shifted in terms of a targeted adjustment of the torque of the floating plate of the wheel receptacle with respect to the first or the second working state.

## Revendications

1. Support de roue pour un banc d'essai fonctionnel pour véhicules automobiles à roues directrices, le support de roue comportant une plaque flottante et au moins un rouleau qui est monté sur la plaque flottante et peut être déplacé dans un plan horizontal avec la plaque flottante, **caractérisé en ce que** le support de roue présente un premier état de fonctionnement dans lequel la partie de la plaque flottante sur laquelle repose le au moins un rouleau est supporté de manière à pouvoir tourner autour d'un axe vertical (8) qui, par rapport au sens du déplacement du véhicule situé sur le banc, est situé devant le au moins un point de contact des roues sur le au moins un rouleau de support de roue, **en ce que** le support de roue présente un second état de fonctionnement dans lequel la partie de la plaque flottante sur laquelle repose le au moins un rouleau est supporté de manière à pouvoir tourner autour d'un axe vertical (9) qui est situé derrière le au moins un point de contact de roue du au moins un rouleau de support de roue par rapport à la direction de déplacement d'un véhicule situé dans le banc à rouleaux, et **en ce que** des moyens de réglage (10, 11) sont affectés à la plaque flottante pour tourner la partie de la plaque flottante sur laquelle repose le au moins un rouleau dans le premier et le second état de fonctionnement autour de l'axe vertical correspondant (8, 9).

**2.** Support de roue selon la revendication 1, **caractérisé en ce que** le au moins un rouleau du support de roue est constitué d'un double rouleau, chacun des rouleaux étant relié par un embrayage commutable (701, 702) à un système d'entraînement (4, 5, 6).

**3.** Support de roue selon la revendication 1 ou 2, **caractérisé en ce que** des moyens d'accouplement (8 ; 9) d'un système d'entraînement respectif (10 ; 11) sont en prise avec le support de roue de telle sorte que, par un blocage de l'un des systèmes d'entraînement (10 ; 11) avec actionnement simultané de l'autre système d'entraînement (11 ; 10), la partie de la plaque flottante sur laquelle est monté le au moins un rouleau soit tournée dans le premier ou le deuxième état de fonctionnement.

**4.** Procédé de commande des moyens de réglage d'une plaque flottante selon l'une des revendications 1 à 3, **caractérisé en ce que** la partie de la plaque flottante sur laquelle repose le au moins un rouleau est tournée par les moyens de réglage dans une position souhaitée de telle sorte que l'axe du au moins un rouleau du support de roue soit parallèle à une projection en direction verticale dans le plan horizontal de l'axe de roue de la roue reposant sur le au moins un rouleau, la rotation ayant lieu dans le premier état de fonctionnement de la plaque flottante ou dans le second état de fonctionnement de la plaque flottante, en fonction de la direction et de la force d'un angle de braquage de la roue du véhicule et selon que la roue du véhicule entraîne ou freine le au moins un rouleau, voire est entrainée ou freinée par le au moins un rouleau.

**5.** Procédé selon la revendication 4, **caractérisé en ce que** l'on détermine le premier ou le second état de fonctionnement du support de roue avec un rouleau ou avec des rouleaux doubles couplés, respectivement, en fonction d'au moins l'une des combinaisons suivantes de l'état dynamique du véhicule et de l'état dynamique du rouleau individuel ou des rouleaux doubles couplés, respectivement, du support de roue, en utilisant les valeurs suivantes :

| | La roue tourne vers l'avant $\alpha > 0$ | État dynamique du rouleau | | État dynamique du véhicule | |
|---|---|---|---|---|---|
| Cas | c - signe de la force latérale | le rouleau entraîne la roue | le rouleau freine la roue | la roue entraîne le rouleau | la roue freine les rouleaux |
| 1 | + | X | | | |
| 2 | - | | X | | |
| 3 | - | | | X | |
| 4 | + | | | | X |
| 5 | + / - | X | | X | |
| 6 | + | X | | | X |
| 7 | - | | X | X | |
| 8 | + / - | | X | | X |

| Cas | La roue tourne en sens inverse, $\alpha > 0$ | État dynamique du rouleau | | État dynamique du véhicule | |
|---|---|---|---|---|---|
| | c - signe de la force latérale | le rouleau entraîne la roue | le rouleau freine la roue | la roue entraîne le rouleau | la roue freine les rouleaux |
| 1 | - | X | | | |
| 2 | + | | X | | |
| 3 | + | | | X | |
| 4 | - | | | | X |
| 5 | + / - | X | | X | |
| 6 | - | X | | | X |
| 7 | + | | X | X | |
| 8 | + / - | | X | | X |

dans lequel la première condition de fonctionnement est déterminée lorsque la valeur c a une valeur négative (-) et la seconde condition de fonctionnement est déterminée lorsque la valeur c a une valeur positive (+).

6. Procédé selon la revendication 4 ou 5 en relation supplémentaire avec la configuration selon la revendication 2, **caractérisé en ce que** les embrayages commutables (701, 702) d'au moins un support de roue du banc d'essai fonctionnel sont commutés dans le sens d'un réglage sélectif du couple du plateau flottant du support de roue par rapport au premier ou second état de fonctionnement.

Fig. 1

Fig. 2

Fig. 3

Fig. 4

Fig. 5

Fig. 6

Fig. 7

**IN DER BESCHREIBUNG AUFGEFÜHRTE DOKUMENTE**

**In der Beschreibung aufgeführte Patentdokumente**

- EP 2166332 A2
- DE 102014111191 A1
- US 2010001167 A1
- DE 20105929
- US 6473978 B1
- WO 2008000229 A2
- EP 1596179 A2
- EP 1143219 A2
- DE 102014111192 A1